(19)

Europäisches
Patentamt
European
Patent Office
Office européen
des brevets

(11)  **EP 3 220 395 A1**

(12)  **EUROPEAN PATENT APPLICATION**

(43) Date of publication:
**20.09.2017  Bulletin 2017/38**

(51) Int Cl.:
**H01F 1/055** *(2006.01)*

(21) Application number: **17157587.1**

(22) Date of filing: **23.02.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **16.03.2016  PCT/JP2016/001507**

(71) Applicant: **Kabushiki Kaisha Toshiba
Tokyo
105-8001 (JP)**

(72) Inventors:
• **TAKAHASHI, Toshihide**
  **Tokyo (JP)**
• **SAKURADA, Shinya**
  **Tokyo (JP)**
• **HORIUCHI, Yosuke**
  **Tokyo (JP)**
• **HAGIWARA, Masaya**
  **Tokyo (JP)**
• **KOBAYASHI, Tadahiko**
  **Tokyo (JP)**

(74) Representative: **Hoffmann Eitle
Patent- und Rechtsanwälte PartmbB
Arabellastraße 30
81925 München (DE)**

(54)  **PERMANENT MAGNET, ROTARY ELECTRICAL MACHINE, AND VEHICLE**

(57)  A permanent magnet of an arrangement includes a sintered compact, the sintered compact including: a composition expressed by $R_pFe_qM_rCu_sCo_{100-p-q-r-s}$, (R is at least one element selected from rare earth elements, M is at least one element selected from Zr, Ti, and Hf, $10.5 \leq p \leq 12.5$ atomic%, $24 \leq q \leq 40$ atomic%, $0.88 \leq r \leq 4.5$ atomic%, and $3.5 \leq s \leq 10.7$ atomic%); and a structure having crystal grains each composed of a main phase including a $Th_2Zn_{17}$ crystal phase, and a crystal grain boundary of the crystal grains. An average crystal grain diameter of the crystal grains is 50 $\mu$m or more and 100 $\mu$m or less, and a ratio of the crystal grains having a crystal grain diameter of 50 $\mu$m or more is 75% or more.

EP 3 220 395 A1

**Description**

FIELD

Arrangements described herein relate generally to a permanent magnet, a rotary electrical machine, and a vehicle.

BACKGROUND

As a high-performance permanent magnet, rare-earth magnets such as a Sm-Co based magnet and a Nd-Fe-B based magnet are known. When a permanent magnet is used in a motor of a vehicle such as a hybrid electric vehicle (HEV) or an electric vehicle (EV), it is demanded for the permanent magnet to have heat resistance. In the motor for HEV or EV, the permanent magnet whose heat resistance is increased by replacing a part of Nd of the Nd-Fe-B based magnet with Dy is used. Dy is one of rare elements, and thus a permanent magnet not using Dy is demanded. As high-efficiency motor and generator, a variable magnetic flux motor and a variable magnetic flux generator using a variable magnet and a stationary magnet are known. For higher performance and higher efficiency of the variable magnetic flux motor and the variable magnetic flux generator, it is demanded to increase the coercive force and the magnetic flux density of the variable magnet and the stationary magnet.

The Sm-Co based magnet has a high Curie temperature and thus is known to exert excellent heat resistance as a system not using Dy, and is expected to achieve favorable motor characteristics at high temperature. A $Sm_2Co_{17}$ magnet among the Sm-Co based magnets can be used also as a variable magnet based on its coercive force exertion mechanism or the like. The Sm-Co based magnet is also required to be increased in coercive force, magnetic flux density, and squareness ratio. For increasing the magnetic flux density of the Sm-Co based magnet, it is effective to increase the Fe concentration. However, in a permanent magnet produced by using an alloy powder having a composition range with high Fe concentration and applying the conventional manufacturing method, it is difficult to increase the squareness ratio while keeping the coercive force. Hence, a technique is required which achieves both large coercive force and favorable squareness ratio in the Sm-Co based magnet with high Fe concentration.

RELEVANT REFERENCES

Patent Reference

Reference1: JP-A No. 2014-101547
Reference 2: JP-A No. 2014-192193

BRIEF DESCRIPTION OF THE DRAWINGS

Fig. 1 is a section schematic view illustrating a configuration example of a permanent magnet of an arrangement.
Fig. 2 is a section schematic view illustrating a configuration example of a metal structure a permanent magnet of an arrangement.
Fig. 3 is a view illustrating a permanent magnet motor of an arrangement.
Fig. 4 is a view illustrating a variable magnetic flux motor of an arrangement.
Fig. 5 is a view illustrating a generator of an arrangement.
Fig. 6 is a schematic view illustrating a configuration example of a vehicle of an arrangement.
Fig. 7 is a schematic view illustrating a configuration example of a vehicle of an arrangement.

DETAILED DESCRIPTION

A permanent magnet of an arrangement and its manufacturing method will be described below. The permanent magnet of the arrangement is a sintered magnet including a sintered compact having a composition expressed by a composition formula:

$$R_pFe_qM_rCu_sCo_{100-p-q-r-s}, \ldots \qquad (1)$$

where R represents at least one element selected from rare earth elements, M represents at least one element selected from the group consisting of Zr, Ti, and Hf, p represents a number satisfying $10.5 \leq p \leq 12.5$ atomic%, q represents a number satisfying $24 \leq q \leq 40$ atomic%, r represents a number satisfying $0.88 \leq r \leq 4.5$ atomic%, and s represents a number satisfying $3.5 \leq s \leq 10.7$ atomic%. The sintered compact includes a structure having: crystal grains each composed of a main phase including a $Th_2Zn_{17}$ crystal phase; and a crystal grain boundary of the crystal grains. In the permanent magnet of the arrangement, an average crystal grain diameter of the crystal grains is 50 $\mu$m or more and 100 $\mu$m or less, and a ratio of the crystal grains having a crystal grain diameter of 50 $\mu$m or more in the structure of the sintered compact is 75% or more.

In the above-described composition formula (1), as the element R, at least one element selected from rare-earth elements including yttrium (Y) is used. Any of the elements R brings about great magnetic anisotropy and gives a high coercive force to the permanent magnet. As the element R, at least one element selected from samarium (Sm), cerium (Ce), neodymium (Nd), and praseodymium (Pr) is preferably used, and the use of Sm is especially desirable. When 50 atomic% or more of the element R is set to Sm, it is possible to enhance performances, especially the coercive force of the permanent magnet with good reproducibility. Further, 70 atomic% or more of the element R is desirably Sm.

To increase the coercive force of the permanent magnet, a content p of the element R is set to a range of 10.5 atomic% to 12.5 atomic%. When the content p of the element R is less than 10.5 atomic%, a large amount of $\alpha$-Fe phase precipitates, failing to obtain a sufficient coercive force. When the content p of the element R exceeds 12.5 atomic%, the saturation magnetization remarkably decreases. The content p of the element R is preferably in a range of 10.7 atomic% to 12.3 atomic% or less, and more preferably in a range of 10.9 atomic% to 12.1 atomic%.

Iron (Fe) is an element mainly responsible for the magnetization of the permanent magnet. When a relatively large amount of Fe is contained, it is possible to increase the saturation magnetization of the permanent magnet. However, when an excessively large amount of Fe is contained, the coercive force may decrease because the $\alpha$-Fe phase precipitates or a later-described desired two-phase separation structure is less likely to be obtained. The content q of Fe is set to a range of 24 atomic% to 40 atomic%. The content q of Fe is preferably in a range of 27 atomic% to 36 atomic%, and more preferably in a range of 29 atomic% to 34 atomic%.

As the element M, at least one element selected from titanium (Ti), zirconium (Zr), and hafnium (Hf) is used. As the element M, one kind of element may be used or a plurality of kinds of elements may be used. When the element M is compounded, a large coercive force can be exerted by a composition with high Fe concentration. The content r of the element M is set to a range of 0.88 atomic% to 4.5 atomic%. When the content r of the element M is set to 0.88 atomic% or more, the Fe concentration can be increased. When the content r of the element M exceeds 4.5 atomic%, a hetero-phase rich in the element M is more likely to be generated to decrease both the magnetization and the coercive force. The content r of the element M is preferably in a range of 1.14 atomic% to 3.5 8 atomic%, more preferably in a range of 1.49 atomic% to 2.24 atomic%.

The element M may be any of Ti, Zr, and Hf, and preferably includes at least Zr. In particular, when 50 atomic% or more of the element M is Zr, the effect of enhancing the coercive force of the permanent magnet can be further improved. On the other hand, Hf is especially expensive in the element M, and therefore even if Hf is used, the amount of Hf used is preferably small. The content of Hf is preferably less than 20 atomic% of the element M.

Copper (Cu) is an element for enabling the permanent magnet to exert a high coercive force. A compounding amount s of Cu is set to a range of 3.5 atomic% to 10.7 atomic%. When the compounding amount s of Cu is less than 3.5 atomic%, it becomes difficult to obtain the high coercive force. When the compounding amount s of Cu exceeds 10.7 atomic%, the magnetization remarkably decreases. The compounding amount s of Cu is preferably in a range of 3.9 atomic% to 9 atomic%, and more preferably in a range of 4.3 atomic% to 5.8 atomic%.

Cobalt (Co) is an element responsible for the magnetization of the permanent magnet and necessary for enabling exertion of the high coercive force. When a large amount of Co is contained, the Curie temperature becomes high, and thermal stability of the permanent magnet improves. When the content of Co is too small, these effects cannot be obtained sufficiently. However, when the content of Co is too large, the content ratio of Fe relatively decreases, and the magnetization decreases. The content of Co is therefore set so that the content of Fe satisfies the above range in consideration of the contents of the element R, the element M and Cu.

A part of Co may be replaced with at least one element A selected from nickel (Ni), vanadium (V), chrome (Cr), manganese (Mn), aluminum (Al), gallium (Ga), niobium (Nb), tantalum (Ta) and tungsten (W). As the element A, one element may be used or a plurality of elements may be used. These replacement elements A contribute to improvement of magnetic properties, for example, the coercive force. However, excessive replacement of Co with the element A may cause decrease in magnetization, and thus the amount of replacement with the element A is preferably 20 atomic% or less of Co.

The permanent magnet of the arrangement is a sintered magnet made of a sintered compact having a composition expressed by the composition formula (1). The sintered magnet (sintered compact) has a region including a $Th_2Zn_{17}$ crystal phase as a main phase. The main phase of the sintered magnet means a phase having the largest area ratio in an observation image (SEM image) when the cross section or the like of the sintered compact is observed under a scanning electron microscope (SEM). The main phase of the sintered magnet preferably has a phase separation structure formed by using a $TbCu_7$ crystal phase (1-7 crystal phase) being a high-temperature phase as a precursor and performing an aging treatment thereon. The phase separation structure has a cell phase composed of a $Th_2Zn_{17}$ crystal phase (2-17 phase) and a cell wall phase composed of a $CaCu_5$ crystal phase (1-5 phase) or the like. The magnetic domain wall energy of the cell wall phase is larger than that of the cell phase. This difference in the magnetic domain wall energy is a barrier to movement of the magnetic domain wall. Specifically, it is thought that the cell wall phase having large magnetic domain wall energy acts as a pinning site, and thereby the coercive force of a magnetic domain wall pinning type is exerted.

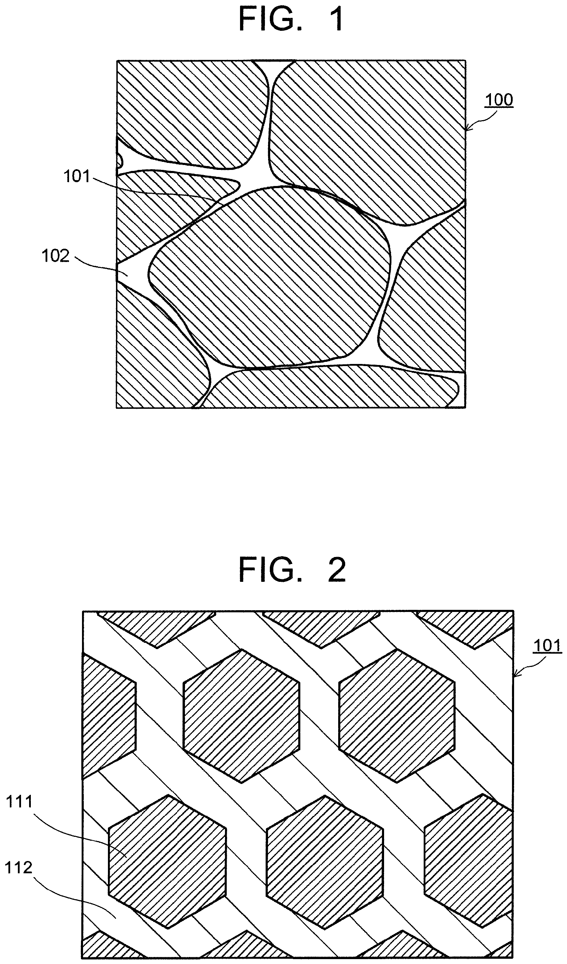

Fig. 1 is a section schematic view illustrating a configuration of the sintered magnet of the arrangement. The sintered magnet 100 of the arrangement has crystal grains 101 each composed of the main phase including a $Th_2Zn_{17}$ crystal phase, and is composed of a polycrystal (sintered compact) of such crystal grains. Between the crystal grains 101 constituting the sintered compact (100), a crystal grain boundary 102 exists. Fig. 2 is a section schematic view illustrating a configuration of a metal structure of the sintered magnet of the arrangement. The crystal grain 101 has a cell phase 111 composed of a 2-17 phase, and a sell wall phase 112 surrounding the cell phase 111 and composed of a 1-5 phase and so on. The size (crystal grain diameter) of the crystal grains 101 constituting the sintered compact is generally of the order of microns. On the other hand, the size of the cell phase 111 in the crystal grain (main phase) is of the order of nanometers (for example, about 50 nm to 400 nm), and the thickness of the cell wall phase 112 surrounding the cell phase 111 is also of the order of nanometers (for example, about 2 nm to 30 nm). The phase separation structure composed of the cell phase 111 and the cell wall phase 112 exists in the crystal grains each composed of the main phase including the 2-17 phase.

The sintered compact constituting the permanent magnet of the arrangement is a polycrystal having the crystal grains each composed of the main phase including the 2-17 phase as described above. In the polycrystal structure of the permanent magnet of the arrangement, an average crystal grain diameter of the crystal grains is set to 50 $\mu$m or more and 100 $\mu$m or less, and a ratio (number ratio) of the crystal grains having a crystal grain diameter of 50 $\mu$m or more is set to 75% or more. Applying the sintered compact having the polycrystal structure to the permanent magnet enables further improvement of the magnetic properties of the permanent magnet (sintered magnet) with high iron concentration. The relationship between the structure of the permanent magnet according to the arrangement and the magnetic properties will be described below in detail.

More specifically, a Sm-Co based sintered compact constituting the permanent magnet is obtained by compression-molding the alloy powder pulverized to a level of several microns while orienting crystals in a magnetic field and retaining the compression molded body at a predetermined temperature to thereby sinter it. Further, in the manufacturing step of the Sm-Co based sintered magnet, a solution heat treatment of retaining the sintered body at a temperature slightly lower than the sintering temperature after the sintering and then rapidly cooling it, is generally performed. The sintering step and the solution heat treatment step are often successively performed, and the sintered compact is generally obtained in the sintering-solution heat treatment step. The magnetization of the sintered compact has a proportional relationship with the density of the sintered compact, and therefore it is desired to obtain a sintered compact density as high as possible. With a higher degree of orientation, the residual magnetization becomes higher. In other words, in order to obtain high residual magnetization, increasing the iron concentration in the raw material composition ratio and obtaining a sintered compact with a high sintered compact density and a high degree of crystal orientation can be a general technique. However, if the iron concentration is excessively increased, the coercive force decreases. Further, there is a limit in improvement in the sintered compact density and the degree of crystal orientation, and therefore it is desired to devise a novel method of improving the magnetization.

The properties of the Sm-Co based sintered magnet are greatly affected by the above-described manufacturing step. For example, when the grain diameter of the alloy powder pulverized to a level of several microns is too large, the sinterability decreases to fail to obtain a sufficient sintered compact density, possibly causing a decrease in magnetization. In contrast, when the grain diameter of the alloy powder is too small, the specific surface area of the powder increases to make the powder more likely to be oxidized, possibly causing a decrease in magnetization. Besides, when the sintering temperature during the sintering is too low, vacancy is generated, failing to obtain a sufficient sintered compact density. Unless the sufficient sintered compact density is obtained, high magnetization cannot be obtained as describe above. Besides, when the sintering temperature is too high, the element R such as Sm being the constituent element evaporates to cause extreme composition deviation. In such a case, there is a possibility that the sufficient coercive force cannot be obtained.

In the case of producing the sintered compact (sintered magnet) by sintering the compression molded body of the pulverized alloy powder, not only the grain diameter of the alloy powder and the sintering temperature but also moisture physically adsorbed to the alloy powder (fine powder) can be considered to affect the polycrystal structure and the properties of the sintered compact. The present inventors have focused on the moisture physically adsorbed to the alloy powder (fine powder) and revealed that the adsorbed moisture amount until the sintering step affects the polycrystal structure of the sintered compact. More specifically, it has been found that the magnetic properties can be improved by controlling the polycrystal structure by managing the adsorbed moisture amount of the alloy powder. In particular, in the case of using the alloy powder having an iron concentration increased in the raw material composition ratio, the adsorbed moisture amount tends to increase, and therefore the management of the adsorbed moisture amount of the alloy powder until the sintering step is important.

Since the alloy powder pulverized to a level of several microns is likely to be affected by oxidation, the alloy powder is usually stored in an inert gas atmosphere such as argon (Ar) or nitrogen ($N_2$). As a result of investigation of the adsorbed moisture amount of the fine powder based on the storage period at that time, it has been revealed that the adsorbed moisture amount increases with an increase in storage time. Further, investigating the relation between the adsorbed moisture amount of the fine powder and the oxygen concentration of the sintered compact produced using the fine power, they have such a dependence that with a larger moisture amount of the fine powder, the oxygen concentration of the sintered compact tends to increase. Further, it has been revealed that the polycrystal structure of the sintered compact increased in oxygen concentration becomes non-uniform in grain size distribution of the crystal grain diameter, and the ratio of the crystal grains of a small size having a diameter of, in particular, less than 50 $\mu$m increases. This is considered that the oxidation of the surface of the fine powder is promoted due to the existence of moisture during the sintering, and the growth of the crystal grains in the sintering-solution heat treatment is suppressed due to the influence of an oxide formed on the surface of the grain. In other words, it has been found that management of the adsorbed moisture amount of the fine powder before the sintering step to a low level makes it possible to coarsen the polycrystal structure of the sintered compact.

As a result of measuring the moisture of the alloy powder stored in an inert gas atmosphere for a fixed period by the Karl Fischer's method, the temperature at which the moisture was detected was mainly in a range of 100°C to 200°C, then the moisture was monotonously decreased in a temperature increase process up to 200°C to 400°C, and no or less moisture was confirmed in a temperature increase process up to 400°C to 700°C. This suggests that the moisture contained in the fine powder is mainly the moisture physically adsorbed to the surface of the fine powder. The moisture, if physically adsorbed water, can be eliminated by retaining the alloy powder at low temperature in a vacuum atmosphere or an atmosphere where an inert gas flows. The sintered magnet of the arrangement is made by performing such a treatment as a pretreatment step of the sintering step of the compression molded body to remove the moisture physically adsorbed to the fine powder and moderately coarsen the polycrystal structure of the sintered compact.

The permanent magnet (sintered magnet) of the arrangement includes a polycrystal structure in which a ratio (number ratio) of crystal grains having a crystal grain diameter of 50 $\mu$m or more is 75% or more based on the above-described pretreatment step of the sintering step or the like. By setting the ratio of crystal grains having a crystal grain diameter of 50 $\mu$m or more to 75% or more in the polycrystal structure constituting the sintered magnet, the coercive force and the squareness ratio of the sintered magnet remarkably improve. To increase the ratio of crystal grains having a crystal grain diameter of 50 $\mu$m or more, it is effective to coarsen the crystal grain size of the whole structure. From this point, the average crystal grain diameter of crystal grains is preferably 50 $\mu$m or more in the sintered compact constituting the permanent magnet. When the average grain diameter of crystal grains is less than 50 $\mu$m, there is a possibility that the effect of improving the coercive force and the squareness ratio of the sintered magnet cannot be sufficiently obtained.

The deterioration in the coercive force and the squareness ratio is considered to be caused by disarrangement of the structure near the crystal grain boundary in the polycrystal structure of the sintered compact. The phase separation is satisfactorily made between the cell phase composed of the 2-17 phase and the cell wall phase composed of the 1-5 phase or the like near the center of the crystal grains each composed of the main phase, whereas the above-described phase separation is insufficient near the crystal grain boundary due to the existence of the grain boundary phase being the hetero-phase. As for this point, coarsening the crystal grain size enables decrease of the region where the phase separation is insufficient due to the existence of the grain boundary phase. Specifically, setting the ratio of crystal grains having a crystal grain diameter of 50 $\mu$m or more to 75% or more enables expansion of the region with good phase separation in the crystal grains. This can improve the magnetic properties of the sintered magnet, in particular, the coercive force and the squareness ratio.

When the ratio of crystal grains of 50 $\mu$m or more is less than 75%, the amount of the crystal grain boundary relatively increase to decrease the total amount of the phase separation region in the crystal grains each composed of the main phase. This results in a decrease in the coercive force and the squareness ratio of the sintered magnet. In the polycrystal structure of the sintered magnet (sintered compact), the ratio (number ratio) of the crystal grains having a crystal grain diameter of 50 $\mu$m or more is preferably 77% or more, and more preferably 80% or more. When the average crystal grain diameter of the crystal grains is less than 50 $\mu$m, a sufficient effect of coarsening the crystal grain cannot be obtained. The average crystal grain diameter of the crystal grains is preferably 55 $\mu$m or more, and more preferably 60 $\mu$m or more. When the average crystal grain diameter of the crystal grains is too large, the strength or the like of the sintered compact (sintered magnet) becomes more likely to decrease, and therefore the average crystal grain diameter of the crystal grains is preferably 100 $\mu$m or less.

Further, the crystal grains constituting the polycrystal structure of the sintered magnet are preferably uniform in grain diameter. In other words, the shape of the grain size distribution of the crystal grain diameters is sharp. More specifically, a ratio (number ratio) of crystal grains having crystal grain diameters falling within a range of $\pm 10$ $\mu$m with respect to the average grain diameter is preferably 30% or more. This can further improve the coercive force and the squareness ratio of the sintered magnet. The ratio of crystal grains having crystal grain diameters falling within the range of $\pm 10$ $\mu$m with respect to the average grain diameter is more preferably 40% or more.

As described above, the permanent magnet of the arrangement is further improved in the coercive force and the squareness ratio by sufficiently growing the crystal grains constituting the sintered compact (the average crystal grain diameter of 50 $\mu$m or more) to set the ratio of crystal grains having a crystal grain diameter of 50 $\mu$m or more to 75% or more. A concrete coercive force of the permanent magnet of, for example, 1500 kA/m or more can be realized. A concrete squareness ratio of the permanent magnet of, for example, 90% or more can be realized.

The squareness ratio is defined as follows. First, a DC B-H tracer measures DC magnetization property at room temperature. Then, from the B-H curve obtained from the measurement result, residual magnetization Mr, a coercive force iHc, and a maximum energy product (BH)max, which are basic properties of a magnet, are found. At this time, Mr is used to find a theoretical maximum value (BH)max by the following expression (2).

$$(BH)max \text{ (theoretical value)} = Mr^2/4\mu_0 \quad \dots. (2)$$

The squareness ratio is evaluated from a ratio between (BH)max (measured value) obtained by the measurement and (BH)max (theoretical value), and is found by the following expression (3).

$$\text{Squareness ratio (\%)} = (BH)max \text{ (actual measured value)}/(BH)max \text{ (theoretical value)} \times 100 \dots (3)$$

The method of measuring the above-described crystal grain size will be described below in detail. The crystal grain boundary can be generally observed under an optical microscope or a scanning electron microscope (SEM). However, the sizes of the crystal grains constituting the sintered compact (sintered magnet) are measured and evaluated here by a SEM-electron backscattering pattern (SEM-EBSP) method. The reason is that when the crystal grain boundary is observed through a secondary electron image and a reflected electron image of the SEM, the crystal grain boundary generally appears in a linear shape. At this time, the line indicating the crystal grain boundary is often unclear, in which case it is difficult to accurately measure the crystal grain size. Therefore, for the measurement of the crystal grain size, the EBSP method of recognizing the crystal grain by the difference in degree of orientation of the crystal grains is used.

To recognize the crystal grain boundary, misorientation desired to be recognized (misorientation being a reference) is designated. The misorientation is designated by angle. When the misorientation between adjacent pixels (measurement points) is larger than the designated reference, the existence of the grain boundary there can be recognized. For example, when the misorientation from the (0001) plane of the 1-7 phase is designated to be 5 degrees or more, a portion with disturbance in crystal orientation (misorientation of 5 degrees or more) can be recognized as the crystal grain boundary.

The structure observation by the SEM and the measurement by the SEM-EBSP are performed for the inside of the sintered compact. The measurement of the inside of the sintered compact is as follows. At a center part of a longest side of a surface having the maximum area, the measurement is performed at a surface portion and the inside of the cross section cut perpendicular to the side (in the case of a curved line, perpendicular to a tangent line of the center portion). The measurement location is defined such that, in the cross section, a reference line 1 drawn from the one-half position of each side as a starting point, perpendicular to the side, toward the inside up to the end portion, and a reference line 2 drawn from the center of each corner portion as the starting point, at the one-half position of an angle of an inner angle of the corner portion, toward the inside up to the end portion are provided. A position of 1 % of lengths of the reference lines from the starting points of the reference lines 1, 2 is defined as a surface portion, and a position of 40% is defined as the inside. In the case where the corner portion has a curvature due to chamfering or the like, an intersection point of extended adjacent sides is set as the end portion of the side (the center of the corner portion). In this case, the measurement location is a position not from the intersection point but from a part in contact with the reference line.

By deciding the measurement locations as described above, for example, in the case of the cross section being a square, the reference lines are eight in total including four reference lines 1 and four reference lines 2. The measurement locations are eight locations each at the surface portion and the inside. In this arrangement, preferably the definition of the above-described crystal grain diameter or the like is satisfied at all the eight locations each at the surface portion and at the inside. However, the definition only needs to be satisfied at least four locations or more each at the surface portion and at the inside. This case does not specify the relationship between the surface portion and the inside on one reference line. The observation surface inside the sintered compact specified in this manner is polished and smoothed, and then observed.

A concrete procedure of obtaining the size and the average grain diameter (average crystal grain diameter) of the crystal grains existing in the measurement area will be described below. Observation is performed at a cross section, of the sintered compact oriented in a magnetic field, perpendicular to the easy magnetization axis (the [0034] orientation of the 1-7 crystal phase/the c-axis direction) of the 2-17 phase being the cell phase. This cross section is defined as an ND plane. In a specimen with ideal orientation, the (0001) planes of all of the crystal grains are in a relation parallel with the ND plane (namely, the [0035] orientation is perpendicular to the ND plane).

First, as a pretreatment for the observation surface of a specimen, the specimen is embedded in an epoxy resin and subjected to mechanical polishing and buffing, and then subjected to water washing and water spraying by air blow. The specimen after the water spraying is subjected to surface treatment by a dry etching apparatus. Then, the specimen surface is observed under a scanning electron microscope S-4300SE (manufactured by Hitachi High-Technologies Corporation) attached to an EBSD system-Digiview (manufacture by TSL Com). The observation conditions are an acceleration voltage of 30 kV and a measurement area of 500 $\mu$m $\times$ 500 $\mu$m. The observation magnification is desirably based on 150 times. However, when the number of crystal grains within the measurement area (500 $\mu$m $\times$ 500 $\mu$m) is less than 15, desirably the observation magnification is 250 times and the measurement area is 800 $\mu$m $\times$ 800 $\mu$m. From the observation result, the size and the average grain diameter of the crystal grains existing in the measurement area range are found under the following conditions.

The orientations of all pixels within the measurement area range are measured in a step size of 2 $\mu$m, and a boundary of misorientation between adjacent pixels is 5° or more is regarded as a crystal grain boundary. The crystal grain size is obtained by measuring a grain area being an area in the same crystal grain surrounded the crystal grain boundary and using the diameter of a perfect circle having the same area as the measured grain area. The measurement of the crystal grain size is performed on all crystal grains existing in the measurement area range to evaluate the ratio of the number of crystal grains having a crystal grain diameter of 50 $\mu$m or more. The average crystal grain diameter of the crystal grains is an average value of the crystal grain diameters of the all crystal grains existing in the measurement area range. The ratio of the crystal grains having a crystal grain diameter of 50 $\mu$m or more is found by a comparison between the crystal grain diameters of the all crystal grains existing in the measurement area range and the average crystal grain diameter. However, a crystal grain having less than 5 points as measurement points included in the same crystal grain, and a crystal grain reached the end portion of the measurement area range are not regarded as a crystal grain. The average grain diameter of the crystal grains is an average value of the grain diameter of the crystal grains existing in the measurement area range.

The permanent magnet of the arrangement is improved in the coercive force and the squareness ratio by sufficiently growing the crystal grains constituting the sintered compact (the average crystal grain diameter of 50 $\mu$m or more) and setting the ratio of crystal grains having a crystal grain diameter of 50 $\mu$m or more to 75% or more. To grow the crystal grains to decrease the abundance ratio of the crystal grain boundary, an increase in sintering temperature is generally effective. However, as described above, the element R such as Sm evaporates due to sintering at high temperature in the Sm-Co based sintered magnet to make it difficult to control the composition. From the viewpoint of the composition control, the sintering temperature is desirably 1190°C or lower. At the sintering temperature of 1190°C or lower, however, the diffusion velocity of an atom decreases to fail to sufficiently grow the crystals. As for this point, the present inventors et al. have found that it is effective not only to increase the sintering time but also to manage the adsorbed moisture amount of the alloy powder before sintering to a low level as conditions of suppressing excessive evaporation of Sm or the like and of sufficiently growing the crystals, and found a practical method therefor. Concrete sintering conditions and so on will be described below in detail.

The permanent magnet of the arrangement is produced as follows. The permanent magnet manufacturing method preferably includes: a step of producing a compression molded body by pressure-molding an alloy powder having a composition expressed by the composition formula (1) in a magnetic field, a step of removing moisture contained in the compression molded body by retaining the compression molded body at a temperature of 100°C or lower for 2 hours or more in a vacuum atmosphere of 1 Pa or less or an atmosphere where an inert gas flows, a step of producing a sintered compact by sintering the compression molded body from which the moisture has been removed, a step of performing a solution heat treatment on the sintered compact, and a step of performing an aging treatment on the sintered compact after the solution heat treatment.

The manufacturing step of the permanent magnet of the arrangement will be described below in detail. First, an alloy powder containing a predetermined amount of element is produced. The alloy powder is prepared by casting a molten alloy melted by an arc melting method or a high-frequency melting method to form an alloy ingot and grinding the alloy ingot. Other methods of preparing the alloy powder include a strip cast method, a mechanical alloying method, a mechanical grinding method, a gas atomizing method, a reduction diffusion method and the like. The alloy powder prepared by these methods may be used. A heat treatment may be performed as necessary on the thus-obtained alloy powder or an alloy before pulverization to homogenize it. The grinding of a flake or an ingot is performed using a jet mill, a ball mill or the like. The grinding is preferably performed in an inert gas atmosphere or an organic solvent in order to prevent oxidation of the alloy powder.

The average grain diameter of the alloy powder after grinding is preferably in a range of 2 μm to 5 μm, and the volume ratio of grains having a grain diameter in a range of 2 μm to 10 μm is preferably 80% or more of the whole powder. The alloy powder having such a grain diameter is likely to orient in a magnetic field. The grinding is preferably performed by a jet mill. With a ball mill, fine powder generated during the grinding cannot be removed, so that even if the average grain diameter is in the range of 2 μm to 5 μm, many grains at a submicron level are contained. Aggregation of the fine grains at a submicron level makes the alloy powder less likely to orient in the magnetic field. The fine grain at a submicron level is a cause of increasing the adsorbed moisture amount and the amount of oxide in the sintered compact, possibly decreasing the coercive force and the squareness ratio.

When the iron concentration in the magnet composition is 24 atomic% or more, the volume ratio of grains having a grain diameter of more than 10 μm in the alloy powder after the grinding is preferably 10% or less. When the iron concentration is 24 atomic% or more, the amount of the hetero-phase in the alloy ingot is more likely to increase. The hetero-phase tends to increase not only in amount but also in size, and becomes sometimes 20 μm or more. When a grain of, for example, 15 μm or more exists in the ingot when ground, the grain sometimes becomes a hetero-phase grain as it is. Such a hetero-phase grain remains also after sintering, and causes a decrease in the coercive force, a decrease in the magnetization, a decrease in the squareness ratio and so on. From this point, it is preferable to decease the ratio of coarse grains.

Then, the alloy powder is put in a metallic mold disposed in an electromagnet, and pressure-molded while a magnetic field is being applied thereon to manufacture a compression molded body having an oriented crystal axis. The obtained compression molded body is sintered under appropriate conditions, a sintered compact having a high density can be obtained. In the arrangement, the compression molded body is put in the sintering furnace, and a step of retaining the compression molded body at a temperature of 100°C or lower in a vacuum atmosphere or an atmosphere where an inert gas flows is performed before the sintering treatment to eliminate the moisture contained in the compression molded body. As described above, moisture exists physically adsorbed to the alloy powder (fine powder) being the precursor of the compression molded body. The physically adsorbed moisture can be eliminated from the alloy powder and the compression molded body by retaining the compression molded body under a vacuum atmosphere or retaining the compression molded body while an inert gas is being sprayed thereto. In particular, since the alloy powder having an iron concentration increased in the raw material composition ratio tends to increase in adsorbed moisture amount, it is effective to perform the pretreatment step of retaining the compression molded body at a temperature of 100°C or lower in a vacuum atmosphere or an atmosphere where an inert gas flows before the sintering step, to remove the moisture contained in the compression molded body.

The retaining treatment under the vacuum atmosphere is performed preferably under a vacuum condition of 1 Pa or less, more preferably 0.1 Pa or less, and furthermore preferably 0.01 Pa or less. The retaining treatment under the atmosphere where the inert gas flows is performed preferably while spraying the inert gas such as an argon gas (Ar) to the compression molded body. The temperature during the retaining treatment is preferably 100°C or lower, more preferably 50°C or lower, and furthermore preferably 30°C or lower. When the temperature exceeds 100°C, oxidation of the alloy powder due to the physically adsorbed moisture becomes more likely to occur, decreasing the effect of the pretreatment step performed before the sintering step. To further suppress the oxidation of the alloy powder due to the physically adsorbed moisture, the temperature during the retaining treatment is preferably 50°C or lower. The retaining time is preferably 2 hours or more, more preferably 4 hours or more, and furthermore preferably 6 hours or more. When the retaining time is less than 2 hours, the moisture cannot be sufficiently eliminated from the compression molded body. By performing the retaining step (the pretreatment step of the sintering step), the moisture contained in the compression molded body can be eliminated.

Subsequently, the sintering step of the compression molded body is performed. The sintering step is performed in a vacuum atmosphere or in an inert gas atmosphere such as an Ar gas. To increase the density of the sintered compact, the sintering step is preferably performed in combination of the sintering in the vacuum atmosphere and the sintering in the inert gas atmosphere. In this case, it is preferable to heat the compression molded body up to a predetermined temperature in the vacuum atmosphere, then switch the sintering atmosphere from the vacuum atmosphere to the inert gas atmosphere, and thereafter heat the compression molded body up to a predetermined sintering temperature to thereby sinter it. The sintering in the vacuum atmosphere is performed continuously from the retaining step in the vacuum atmosphere.

The sintering temperature is preferably set to a range of 1110°C to 1190°C. The retaining time (sintering time) at the sintering temperature is preferably set to a range of 6 hours to 20 hours. When the sintering temperature exceeds 1190°C, Sm or the like in the alloy powder excessively evaporates to cause composition deviation, possibly failing to obtain excellent magnetic properties. When the sintering temperature is lower than 1110°C, a dense sintered compact cannot be obtained. The sintering temperature is more preferably 1150°C or higher and furthermore preferably 1165°C or higher. The sintering temperature is more preferably 1185°C or lower. In the sintering in the vacuum atmosphere, the temperature may be raised to the sintering temperature, or may be raised to a temperature slightly lower than the sintering temperature. Further, the compression molded body may be retained at the raised temperature in the vacuum atmosphere for a predetermined time.

To grow the crystal grains to decrease the ratio of the crystal grain boundary, the sintering time is preferably set to 6 hours or more. When the sintering time is less than 6 hours, the crystal grains cannot be sufficiently grown. This leads to a possibility of failing to sufficiently enhance the magnetic properties of the sintered magnet. Further, non-uniformity of the density occurs, also making the magnetization more likely to decrease. When the sintering time exceeds 20 hours, the evaporation amount of Sm or the like increases, possibly making it difficult to control the composition. The sintering time is more preferably 8 hours or more, and furthermore preferably 10 hour or more. The sintering time is more preferably 16 hours or less, and furthermore preferably 14 hours or less.

Next, the solution heat treatment is performed on the obtained sintered compact to control the crystal structure. The solution heat treatment may be performed subsequently to the sintering. To obtain the 1-7 phase being the precursor of the phase separation structure, the solution heat treatment is preferably performed by retaining the sintered compact at a temperature in a range of 1100°C to 1190°C for 6 hours to 28 hours. The solution heat treatment temperature is preferably set to a temperature lower than the sintering temperature. At a temperature lower than 1100°C and at a temperature exceeding 1190°C, the ratio of the 1-7 phase in the specimen after the solution heat treatment is small, failing to obtain excellent magnetic properties. The solution heat treatment temperature is more preferably in a range of 1120°C to 1180°C, and furthermore preferably in a range of 1120°C to 1170°C.

The solution heat treatment time also affects the grain growth, and when the time is short, the ratio of the crystal grain boundary cannot sufficiently be decreased. Further, the constituent phase becomes non-uniform, and the coercive force may decrease. Therefore, the retaining time at the solution heat treatment temperature is preferably 6 hours or more. However, when the retaining time at the solution heat treatment temperature is too long, the evaporation amount of Sm or the like increases, possibly making it difficult to control the composition. Therefore, the retaining time at the solution heat treatment temperature is preferably 28 hours or less. The solution heat treatment time is more preferably set to a range of 12 hours to 24 hours, and furthermore preferably a range of 14 hours to 18 hours. To prevent oxidation, the solution heat treatment is preferably performed in a vacuum atmosphere or an inert gas atmosphere such as argon gas.

To sufficiently grow the crystal grains in the sintered compact, it is preferable to increase not only the sintering time but also the solution heat treatment time. Therefore, each of the sintering time and the solution heat treatment time is preferably set to 6 hours or more. In addition to this, the total time of the sintering time and the solution heat treatment time is preferably set to 16 hours or more. In other words, when the sintering time is 6 hours, the solution heat treatment time is preferably 10 hours or more. When the solution heat treatment time is 6 hours or more, the sintering time is preferably 10 hours or more. When the total time of them is less than 16 hours, there is a possibility that the ratio of the crystal grains having a crystal grain diameter of less than 50 $\mu$m cannot be sufficiently decreased. The total time of the sintering time and the solution heat treatment time is more preferably 19 hours or more, and furthermore preferably 22 hours or more.

In the solution heat treatment step, it is preferable to perform rapid cooling after the sintered compact is retained at the above-described temperature for a fixed time. This rapid cooling is performed for maintaining the 1-7 phase being a metastable phase also at room temperature. When a long-term sintering and solution heat treatment is performed, the 1-7 phase may become less likely to be stable. At this time, by setting the cooling rate to -170 °C/min or less, the 1-7 phase becomes more likely to be stable, making the coercive force more likely to be exerted. When the cooling rate exceeds -170 °C/min, a $Ce_2Ni_7$ crystal phase (2-7 phase) may be generated during the cooling. This phase may become a cause of decreasing the magnetization and the coercive force. In the 2-7 phase, Cu is often concentrated, which decreases the Cu concentration in the main phase, making the phase separation by the aging treatment into the cell phase and the cell wall phase less likely to occur.

Next, the aging treatment is performed on the sintered compact after the solution heat treatment. The aging treatment is a treatment that controls the crystal structure to increase the coercive force of the magnet. The aging treatment preferably retains the sintered compact at a temperature of 700°C to 900°C for 0.5 hours to 80 hours, then slowly cools the sintered compact down to a temperature of 400°C to 650°C at a cooling rate of -0.2°C/min to -2°C/min, and continuously cools the sintered compact down to room temperature in the furnace. The aging treatment may be performed by a heat treatment at two stages. For example, the above-described heat treatment is performed as the first stage, and thereafter the sintered compact is retained at a temperature of 400°C to 650°C for a fixed time as the heat treatment at the second stage, and then continuously cooled down to room temperature in the furnace, thereby sometimes improving the coercive force. The retaining time is preferably set to a range of 1 hour to 6 hours. To prevent oxidation, the aging treatment is preferably performed in a vacuum atmosphere or an inert gas atmosphere.

When the aging treatment temperature is lower than 700°C or exceeds 900°C, there is a possibility that the homogeneous mixed structure of the cell phase and the cell wall phase cannot be obtained, and the magnetic properties of the permanent magnet may decrease. The aging treatment temperature is more preferably 750°C to 880°C, and furthermore preferably 780°C to 850°C. When the aging treatment time is less than 0.5 hours, there is a possibility that the precipitation of the cell wall phase from the 1-7 phase does not fully complete. When the aging treatment time exceeds 80 hours, there is a possibility that the thickness of the cell wall phase increases to lower a volume fraction of the cell phase. This becomes a cause of decreasing the magnetic properties. The aging treatment time is more preferably in a range of 4 hours to 60 hours, and furthermore preferably in a range of 8 hours to 40 hours.

When the cooling rate after the aging treatment exceeds -0.2°C/min, there is a possibility that the thickness of the cell wall phase increases to lower the volume fraction of the cell phase. On the other hand, when the cooling rate after the aging treatment is less than -2°C/min, there is a possibility that the homogeneous mixed structure of the cell phase and the cell wall phase cannot be obtained. In any case, there is a possibility that the magnetic properties of the permanent magnet cannot be sufficiently enhanced. The cooling rate after the aging treatment is more preferably in a range of -0.4 °C/min to -1.5 °C/min, and furthermore preferably in a range of -0.5 °C/min to -1.3 °C/min.

The aging treatment is not limited to the heat treatment at two stages but may be a heat treatment at more stages, and performing multi-stage cooling is also effective. Further, as the pretreatment of the aging treatment, it is also effective to perform a preliminary aging treatment at a temperature lower than the aging treatment temperature and for a short time. Thus, improvement of the squareness of the magnetization curve is expected. More specifically, the squareness of the permanent magnet is expected by setting the temperature of the preliminary aging treatment to 650°C to 790°C, the treatment time to 0.5 hours to 4 hours, and the slow cooling rate after the aging treatment to -0.5 °C/min to -1.5 °C/min.

The permanent magnet of the arrangement is usable in rotary electrical machines such as various motors and generators. The permanent magnet of the arrangement is also usable as a stationary magnet and a variable magnet of a variable magnetic flux motor and a variable magnetic flux generator. The permanent magnet of the arrangement is used to configure the various motors and generators. In applying the permanent magnet of the arrangement to the variable magnetic flux motor, the techniques disclosed in Japanese Laid-open Patent Publication No. 2008-29148 and Japanese Laid-open Patent Publication No. 2008-43172 are applicable to the configuration of the variable magnetic flux motor and a drive system. A vehicle of the arrangement includes a rotary electrical machine such as the motor or generator of the arrangement. Examples of the vehicle of the arrangement include an HEV, an EV and a railway vehicle including at least one of the motor or the generator of the arrangement.

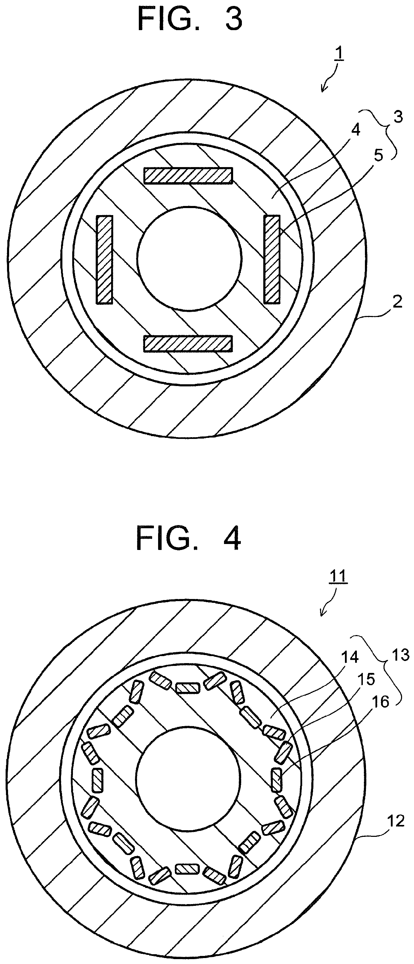

Next, a rotary electrical machine including the permanent magnet of the arrangement will be described referring to the drawings. Fig. 3 illustrates a permanent magnet motor according to the arrangement. A permanent magnet motor 1 illustrated in Fig. 3 includes a rotor 3 arranged in a stator 2. In an iron core 4 of the rotor 3, permanent magnets 5 are arranged which are the permanent magnets of the arrangement. The use of the permanent magnets of the arrangement can achieve high efficiency, downsizing, and low-cost of the permanent magnet motor 1, based on properties of the permanent magnets and the like.

Fig. 4 illustrates a variable magnetic flux motor according to the arrangement. A variable magnetic flux motor 11 illustrated in Fig. 4 includes a rotor 13 arranged in a stator 12. In an iron core 14 of the rotor 13, the permanent magnets of the arrangement are arranged as stationary magnets 15 and variable magnets 16. A magnetic flux density (flux quantum) of the variable magnet 6 can be variable. Since a magnetization direction of the variable magnet 16 is perpendicular to a Q-axis direction, the variable magnet 16 is not affected by a Q-axis current but can be magnetized by a D-axis current. The rotor 13 includes a magnetization winding (not illustrated). An electric current made flowing from a magnetizing circuit to this magnetization winding causes its magnetic field to directly act on the variable magnet 16.

According to the permanent magnet of the arrangement, the stationary magnet 15 can obtain a suitable coercive force. In the case of applying the permanent magnet of the arrangement to the variable magnet 16, it is only necessary to control the coercive force, for example, within a range of 100 kA/m or more and 500 kA/m or less by changing the above-described various conditions (the aging treatment condition and the like) of the manufacturing method. The variable magnetic flux motor 11 illustrated in Fig. 4 can employ the permanent magnet of the arrangement for both the stationary magnet 15 and the variable magnet 16, but the permanent magnet of the arrangement may be used for any one of the magnets. The variable magnetic flux motor 11 can output large torque with a small apparatus size, and is therefore suitable as a motor for a vehicle such as a hybrid vehicle, an electric vehicle or the like required to have a high-output and compact motor.

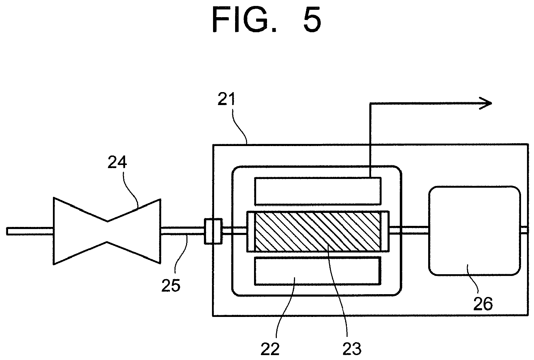

Fig. 5 illustrates a generator according to the arrangement. A generator 21 illustrated in Fig. 5 includes a stator 22 using the permanent magnet of the arrangement. A rotor 23 disposed inside the stator 22 is coupled, via a shaft 25, to a turbine 24 provided at one end of the generator 21. The turbine 24 is rotated by, for example, fluid supplied from the outside. Instead of the turbine 24 rotated by the fluid, the shaft 25 can be rotated by transfer of dynamic rotation such as regenerative energy of a vehicle or the like. The stator 22 and the rotor 23 can employ various publicly-known configurations. The generator 21 of the arrangement is suitable for the generator for a vehicle such as the hybrid electric vehicle, the electric vehicle or the like.

The shaft 25 is in contact with a commutator (not illustrated) disposed on the opposite side to the turbine 24

EP 3 220 395 A1

with respect to the rotor 23, so that an electromotive force generated by the rotation of the rotor 23 is boosted to a system voltage and is transmitted as an output from the generator 21 via an isolated phase bus and a main transformer (not illustrated). The generator 21 may be any of ordinary generator and variable magnetic flux generator. The rotor 23 takes an electric charge by static electricity from the turbine 24 and an axial current accompanying power generation. Therefore, the generator 21 includes a brush 26 for discharging the electric charge of the rotor 23.

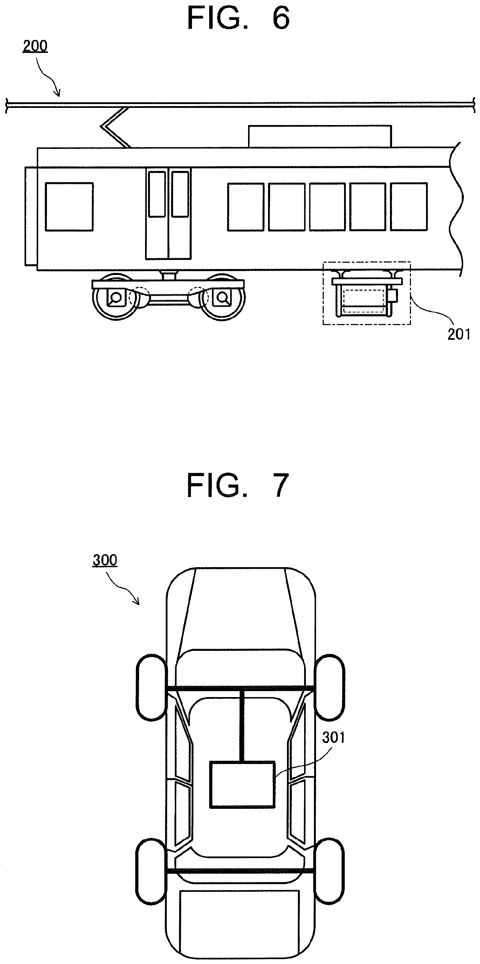

The above-described rotary electrical machine may be mounted on a railway vehicle (an example of the vehicle) used for railway traffic, for example. Fig. 6 is a view illustrating an example of a railway vehicle 200 which has a rotary electrical machine 201. Examples of the rotary electrical machine 201 include the motors of Figs. 3, 4 and the power generator of Fig. 5. When the above-described rotary electrical machine is mounted as the rotary electrical machine 201, the rotary electrical machine 201 maybe used as a motor which outputs drive force by using electric power supplied from a transmission line or electric power supplied from a secondary battery mounted on the railway vehicle 200, for example, or may be used as a generator which supplies electric power to various loads in the railway vehicle 200 by converting kinetic energy into electric power. Using the highly efficient rotary electrical machine such as a rotary electrical machine of the arrangement enables energy-saving running of the railway vehicle.

The above-described rotary electrical machine may be mounted on an automobile (another example of the vehicle) such as a hybrid vehicle or an electric vehicle. Fig. 7 is a view illustrating an example of an automobile 300 which has a rotary electrical machine 301. Examples of the rotary electrical machine 301 include the motors of Figs. 3, 4 and the power generator of Fig. 5. When the above-described rotary electrical machine is mounted as the rotary electrical machine 301, the rotary electrical machine 301 may be used as a motor which outputs drive force of the automobile 300 or a generator which converts kinetic energy at the time of running of the automobile 300 into electric power.

EXAMPLES

Next, examples and their evaluation results will be described.

(Examples 1 to 2)

Raw materials were weighed to have a composition listed in Table 1 and then arc-melted in an Ar gas atmosphere to produce an alloy ingot. The alloy ingot was coarsely ground and then pulverized with the jet mill, to thereby prepare an alloy powder. The alloy powder was press-molded in a magnetic field to produce a compression molded body. The compression molded body of the alloy powder was placed in the chamber of the firing furnace, and evacuation was performed until the degree of vacuum in the chamber reached $5.5 \times 10^{-3}$ Pa. In this state, the temperature in the chamber was managed to 40°C or lower and retained for 6 hours, thereby removing the moisture contained in the compression molded body.

Subsequently, the temperature in the chamber was raised up to 1165°C, the compression molded body was retained at that temperature for 5 minutes, and then an Ar gas was introduced. The temperature in the chamber in the Ar atmosphere was raised up to 1180°C, and the compression molded body was retained at that temperature for 13 hours to be sintered, continuously retained at 1130°C for 24 hours to be subjected to a solution heat treatment, and then cooled down to room temperature at a cooling rate of -240 °C/min. The sintered compact after the solution heat treatment was retained at 710°C for 1 hour and then slowly cooled down to room temperature. Subsequently, the sintered compact was retained at 810°C for 42 hours. The sintered compact subjected to the aging treatment under such conditions was slowly cooled down to 450°C and retained at that temperature for 3 hours, and then cooled in the furnace down to room temperature, whereby an objective sintered magnet was obtained. Production conditions (treatment conditions of the sintering step and the solution heat treatment step) of the sintered compact are listed in Table 2.

The composition of the sintered magnet is as listed in Table 1. The composition analysis of the magnet was carried out by an inductively coupled plasma (ICP) method. The composition analysis by the ICP method was carried out in the following procedure. First, a fixed quantity of a specimen pulverized in a mortar is measured off and put in a quartz beaker. A mixed acid (including nitric acid and hydrochloric acid) is put in the beaker, which is heated to approximately 140°C on a hot plate to completely melt the specimen. The specimen is left standing to cool and then moved to a PFA-made measuring flask to determine the volume, which is used as a specimen solution. The ICP emission spectrochemical analysis device, SPS4000 (manufactured by SII NanoTechnology Inc.) is used to determine the quantities of components by a calibration curve method.

The average crystal grain diameter of the sintered compact, the ratio of crystal grains having a crystal grain diameter of 50 $\mu$m or more, and the ratio of crystal grains having crystal grain diameters falling within a range of $\pm 10$ $\mu$m with respect to the average grain diameter were measured according to the above-described methods for the obtained sintered magnets. Further, the magnetic properties of the sintered magnet were evaluated by a BH tracer, and the coercive force and the squareness ratio were measured. The definition of the squareness ratio is as described above.

These measured results are listed in Table 3. As for the evaluation of the coercive force and the squareness ratio in Table 3, the coercive force when 1500 kA/m or more was regarded as ○ and the coercive force when less than that was regarded as ×, and the squareness ratio when 90% or more was regarded as ○ and the squareness ratio when less than that was regarded as ×.

(Examples 3 to 5)

Raw materials were weighed to have a composition listed in Table 1 and then high-frequency melted in an Ar gas atmosphere to produce an alloy ingot. The alloy ingot was coarsely ground, heat-treated under conditions of 1170°C × 2 hours, and then rapidly cooled down to room temperature. This was pulverized with the jet mill to prepare an alloy powder. The alloy powder was press-molded in a magnetic field to produce a compression molded body. The compression molded body of the alloy powder was placed in the chamber of the firing furnace, and evacuation was performed until the degree of vacuum in the chamber reached $9.0 \times 10^{-1}$ Pa. In this state, the temperature in the chamber was managed to 30°C or lower and retained for 12 hours, thereby removing the moisture contained in the compression molded body.

Subsequently, the temperature in the chamber was raised up to 1165°C, the compression molded body was retained at that temperature for 5 minutes, and then an Ar gas was introduced. The temperature in the chamber in the Ar atmosphere was raised up to 1180°C, and the compression molded body was retained at that temperature for 13 hours to be sintered, continuously retained at 1130°C for 24 hours to be subjected to a solution heat treatment, and then cooled down to room temperature at a cooling rate of -250 °C/min. The sintered compact after the solution heat treatment was retained at 750°C for 1.5 hours and then slowly cooled down to room temperature. Subsequently, the sintered compact was retained at 800°C for 38 hours. The sintered compact subjected to the aging treatment under such conditions was slowly cooled down to 350°C and retained at that temperature for 2 hours, and then cooled in the furnace down to room temperature, whereby an objective sintered magnet was obtained.

The composition of the sintered magnet is as listed in Table 1. Production conditions (treatment conditions of the sintering step and the solution heat treatment step) of the sintered compact are as listed in Table 2. The average crystal grain diameter of the sintered magnet (sintered compact), the ratio of crystal grains having a crystal grain diameter of 50 μm or more, the ratio of crystal grains having crystal grain diameters falling within a range of ±10 μm with respect to the average grain diameter, the coercive force, and the squareness ratio were measured as in Example 1. These measured results are listed in Table 3.

(Examples 6 to 7)

Raw materials were weighed to have a composition listed in Table 1 and then high-frequency melted in an Ar gas atmosphere to produce an alloy ingot. The alloy ingot was coarsely ground, heat-treated under conditions of 1130°C × 2 hours, and then rapidly cooled down to room temperature. This was pulverized with the jet mill to prepare an alloy powder. The alloy powder was press-molded in a magnetic field to produce a compression molded body. The compression molded body of the alloy powder was placed in the chamber of the firing furnace, and evacuation was performed until the degree of vacuum in the chamber reached $2.5 \times 10^{-3}$ Pa. In this state, the temperature in the chamber was managed to 70°C or lower and retained for 4 hours, thereby removing the moisture contained in the compression molded body.

Subsequently, the temperature in the chamber was raised up to 1150°C, the compression molded body was retained at that temperature for 25 minutes, and then an Ar gas was introduced into the chamber. The temperature in the chamber in the Ar atmosphere was raised up to 1180°C, and the compression molded body was retained at that temperature for 13 hours to be sintered, continuously retained at 1130°C for 24 hours to be subjected to a solution heat treatment, and then cooled down to room temperature at a cooling rate of -260 °C/min. The sintered compact after the solution heat treatment was retained at 690°C for 1 hour and then slowly cooled down to room temperature. Subsequently, the sintered compact was retained at 830°C for 45 hours. The sintered compact subjected to the aging treatment under such conditions was slowly cooled down to 300°C and retained at that temperature for 4 hours, and then cooled in the furnace down to room temperature, whereby an objective sintered magnet was obtained. The composition of the sintered magnet is as listed in Table 1. The average crystal grain diameter of the sintered magnet (sintered compact), the ratio of crystal grains having a crystal grain diameter of 50 μm or more, the ratio of crystal grains having crystal grain diameters falling within a range of ±10 μm with respect to the average grain diameter, the coercive force, and the squareness ratio were measured as in Example 1. These measured results are listed in Table 3.

(Examples 8 to 11)

Raw materials were weighed to have a composition listed in Table 1 and then high-frequency melted in an Ar gas atmosphere to produce an alloy ingot. The alloy ingot was coarsely ground, heat-treated under conditions of 1170°C × 2 hours, and then rapidly cooled down to room temperature. This was pulverized with the jet mill to prepare an alloy powder. The alloy powder was press-molded in a magnetic field to produce a compression molded body. The compression molded body of the alloy powder was placed in the chamber of the firing furnace, and evacuation was performed until the degree of vacuum in the chamber reached 5.5 × 10$^{-3}$ Pa. In this state, the temperature in the chamber was managed to 40°C or lower and retained for 6 hours, thereby removing the moisture contained in the compression molded body.

Subsequently, the sintering step and the solution heat treatment step were performed under the conditions listed in Table 2. The cooling rate after the solution heat treatment was -180 °C/min. The sintered compact after the solution heat treatment was retained at 720°C for 2 hours and then slowly cooled down to room temperature. Subsequently, the sintered compact was retained at 820°C for 35 hours. The sintered compact subjected to the aging treatment under such conditions was slowly cooled down to 350°C and retained at that temperature for 1.5 hours, and then cooled in the furnace down to room temperature, whereby an objective sintered magnet was obtained. The composition of the sintered magnet is as listed in Table 1. The average crystal grain diameter of the sintered magnet (sintered compact), the ratio of crystal grains having a crystal grain diameter of 50 μm or more, the ratio of crystal grains having crystal grain diameters falling within a range of ±10 μm with respect to the average grain diameter, the coercive force, and the squareness ratio were measured as in Example 1. These measured results are listed in Table 3.

(Example 12)

Raw materials were weighed to have a composition listed in Table 1 and then high-frequency melted in an Ar gas atmosphere to produce an alloy ingot. The alloy ingot was coarsely ground, heat-treated under conditions of 1170°C × 2 hours, and then rapidly cooled down to room temperature. This was pulverized with the jet mill to prepare an alloy powder. The alloy powder was press-molded in a magnetic field to produce a compression molded body. The compression molded body of the alloy powder was placed in the chamber of the firing furnace, and an Ar gas was made to flow through the chamber such that the Ar gas was sprayed to the compression molded body. In this state, the temperature in the chamber was managed to 40°C or lower and retained for 12 hours, thereby removing the moisture contained in the compression molded body.

Subsequently, the sintering step and the solution heat treatment step were performed under the conditions listed in Table 2. The cooling rate after the solution heat treatment was -180 °C/min. The sintered compact after the solution heat treatment was retained at 720°C for 2 hours and then slowly cooled down to room temperature. Subsequently, the sintered compact was retained at 820°C for 35 hours. The sintered compact subjected to the aging treatment under such conditions was slowly cooled down to 350°C and retained at that temperature for 1.5 hours, and then cooled in the furnace down to room temperature, whereby an objective sintered magnet was obtained. The composition of the sintered magnet is as listed in Table 1. The average crystal grain diameter of the sintered magnet (sintered compact), the ratio of crystal grains having a crystal grain diameter of 50 μm or more, the ratio of crystal grains having crystal grain diameters falling within a range of ±10 μm with respect to the average grain diameter, the coercive force, and the squareness ratio were measured as in Example 1. These measured results are listed in Table 3.

(Comparative Examples 1 to 2)

Sintered magnets were produced as in Example 1 except that the compositions listed in Table 1 were applied. Comparative Example 1 is the one having a Sm concentration in the alloy composition set to more than 12.5 atomic%, and Comparative Example 2 is the one having a Zr concentration in the alloy composition set to more than 4.5 atomic%. The average crystal grain diameter of the sintered magnet (sintered compact), the ratio of crystal grains having a crystal grain diameter of 50 μm or more, the ratio of crystal grains having crystal grain diameters falling within a range of ±10 μm with respect to the average grain diameter, the coercive force, and the squareness ratio were measured as in Example 1. These measured results are listed in Table 3.

(Comparative Example 3)

Raw materials were weighed to have a composition listed in Table 1 and then high-frequency melted in an Ar gas atmosphere to produce an alloy ingot. The alloy ingot was coarsely ground, heat-treated under conditions of 1170°C × 2 hours, and then rapidly cooled down to room temperature. This was pulverized with the jet mill to prepare an alloy powder. The alloy powder was press-molded in a magnetic field to produce a compression molded body. The compression molded body of the alloy powder was placed in the chamber of the firing furnace, and evacuation was performed until the degree of vacuum in the chamber reached 5.5 × 10$^{-3}$ Pa. In this state, the temperature in the chamber was managed to a temperature exceeding 100°C and retained for 6 hours. Subsequently, the temperature in the chamber was raised up to 1160°C, the compression molded body was retained at that temperature for 5 minutes, and then an Ar gas was introduced into the chamber. The temperature in the chamber in the Ar atmosphere was raised up to 1180°C, and the compression molded body was retained at that temperature for 13 hours to be sintered, continuously retained at 1130°C for 24 hours to be subjected to a solution heat treatment, and then cooled down to room temperature at a cooling rate of -200°C/min.

Then, the sintered compact after the solution heat treatment was retained at 720°C for 2 hours and then slowly cooled down to room temperature. Subsequently, the sintered compact was retained at 820°C for 35 hours. The sintered compact subjected to the aging treatment under such conditions was slowly cooled down to 350°C and retained at that temperature for 1.5 hours, and then cooled in the furnace down to room temperature, whereby an objective sintered magnet was obtained. The composition of the sintered magnet is as listed in Table 1. The average crystal grain diameter of the sintered magnet (sintered compact), the ratio of crystal grains having a crystal grain diameter of 50 $\mu$m or more, the ratio of crystal grains having crystal grain diameters falling within a range of $\pm 10$ $\mu$m with respect to the average grain diameter, the coercive force, and the squareness ratio were measured as in Example 1. These measured results are listed in Table 3.

(Comparative Examples 4 to 5)

A raw material mixture weighed to have the same composition as that of Example 8 was used to prepare an alloy powder similarly to Example 8. Subsequently, the alloy powder was press-molded in a magnetic field to produce a compression molded body. Thereafter, a vacuum retaining step, a sintering step, and a solution heat treatment step were performed under conditions listed in Table 2. An aging treatment was performed under the same conditions as those in Example 8 to produce a sintered magnet. The average crystal grain diameter of the sintered magnet (sintered compact), the ratio of crystal grains having a crystal grain diameter of 50 $\mu$m or more, the ratio of crystal grains having crystal grain diameters falling within a range of $\pm 10$ $\mu$m with respect to the average grain diameter, the coercive force, and the squareness ratio were measured as in Example 1. These measured results are listed in Table 3.

[Table 1]

|  | Magnetic Composition (atomic %) | | | | | |
|---|---|---|---|---|---|---|
|  | Sm | Fe | Cu | Zr | Others | Co |
| Example 1 | 11.22 | 26.73 | 6.83 | 1.57 | Cr:0.52 | balance |
| Example 2 | 11.56 | 28.89 | 4.27 | 2.34 | Ti:0.04 | balance |
| Example 3 | 10.55 | 29.94 | 4.39 | 1.87 | Mn:0.17 | balance |
| Example 4 | 11.28 | 32.56 | 5.97 | 1.90 | Cr:0.32 | balance |
| Example 5 | 10.85 | 34.44 | 6.23 | 1.58 | - | balance |
| Example 6 | 10.78 | 31.13 | 4.33 | 1.65 | - | balance |
| Example 7 | 11.23 | 30.26 | 7.89 | 1.88 | - | balance |
| Example 8 | 11.15 | 30.23 | 5.25 | 1.75 | - | balance |
| Example 9 | 11.14 | 30.26 | 5.25 | 1.72 | - | balance |
| Example 10 | 11.43 | 30.38 | 5.23 | 1.74 | - | balance |
| Example 11 | 11.23 | 30.27 | 5.24 | 1.75 | - | balance |
| Example 12 | 11.22 | 26.73 | 6.83 | 1.57 | Cr:0.52 | balance |
| Comparative Example 1 | 12.89 | 23.65 | 5.34 | 1.89 | Cr:0.54 | balance |
| Comparative Example 2 | 13.25 | 26.32 | 5.44 | 1.67 | Ti:0.12 | balance |
| Comparative Example 3 | 10.47 | 28.89 | 5.86 | 1.89 | - | balance |
| Comparative Example 4 | 11.23 | 30.26 | 5.25 | 1.75 | - | balance |
| Comparative Example 5 | 11.25 | 30.24 | 5.25 | 1.75 | - | balance |

[Table 2]

| | Production conditions of sintered compact | | | | | | |
| | Pretreatment (vacuum retaining) step | | | Sintering step | | Solution heat treatment step | |
| | Temperature [°C] | Degree of vacuum [Pa] | Time [h] | Temperature [°C] | Time [h] | Temperature [°C] | Time [h] |
|---|---|---|---|---|---|---|---|
| Example 1 | <40 | $5.5 \times 10^{-3}$ | 6 | 1180 | 13 | 1130 | 24 |
| Example 2 | <40 | $5.5 \times 10^{-3}$ | 6 | 1180 | 13 | 1130 | 24 |
| Example 3 | <30 | $9.0 \times 10^{-1}$ | 12 | 1180 | 13 | 1130 | 24 |
| Example 4 | <30 | $9.0 \times 10^{-1}$ | 12 | 1180 | 13 | 1130 | 24 |
| Example 5 | <30 | $9.0 \times 10^{-1}$ | 12 | 1180 | 13 | 1130 | 24 |
| Example 6 | <70 | $2.5 \times 10^{-3}$ | 4 | 1180 | 13 | 1130 | 24 |
| Example 7 | <70 | $2.5 \times 10^{-3}$ | 4 | 1180 | 13 | 1130 | 24 |
| Example 8 | <40 | $5.5 \times 10^{-3}$ | 6 | 1190 | 6 | 1160 | 12 |
| Example 9 | <40 | $5.5 \times 10^{-3}$ | 6 | 1180 | 16 | 1120 | 10 |
| Example 10 | <40 | $5.5 \times 10^{-3}$ | 6 | 1190 | 10 | 1130 | 10 |
| Example 11 | <40 | $5.5 \times 10^{-3}$ | 6 | 1190 | 10 | 1130 | 18 |
| Example 12 | <40 | (in Ar gas flow) | 12 | 1180 | 13 | 1130 | 24 |
| Comparative Example 1 | <40 | $5.5 \times 10^{-3}$ | 6 | 1180 | 13 | 1130 | 24 |
| Comparative Example 2 | <40 | $5.5 \times 10^{-3}$ | 6 | 1180 | 13 | 1130 | 24 |
| Comparative Example 3 | >100 | $5.5 \times 10^{-3}$ | 6 | 1180 | 13 | 1130 | 24 |
| Comparative Example 4 | <40 | 15 | 6 | 1190 | 6 | 1160 | 12 |
| Comparative Example 5 | <40 | $5.5 \times 10^{-3}$ | 1 | 1190 | 6 | 1160 | 12 |

[Table 3]

| | Average crystal grain diameter [μm] | Ratio of crystal grains of 50 μm or more [%] | Ratio of crystal grains within a force range of ±10 μm to average [%] | Coercive iHc [kA/m] | | Squareness ratio [%] | |
|---|---|---|---|---|---|---|---|
| Example 1 | 60 | 83 | 37 | 1780 | ○ | 93.3 | ○ |
| Example 2 | 61 | 81 | 52 | 1820 | ○ | 92.8 | ○ |
| Example 3 | 58 | 78 | 46 | 1670 | ○ | 92.2 | ○ |
| Example 4 | 59 | 80 | 42 | 1720 | ○ | 93.1 | ○ |
| Example 5 | 60 | 85 | 44 | 1700 | ○ | 93.5 | ○ |
| Example 6 | 54 | 79 | 42 | 1690 | ○ | 91.6 | ○ |
| Example 7 | 56 | 81 | 47 | 1820 | ○ | 92.2 | ○ |
| Example 8 | 52 | 76 | 39 | 1800 | ○ | 92.8 | ○ |
| Example 9 | 58 | 79 | 45 | 1680 | ○ | 93.0 | ○ |

(continued)

|  | Average crystal grain diameter [μm] | Ratio of crystal grains of 50 μm or more [%] | Ratio of crystal grains within a force range of ±10 μm to average [%] | Coercive iHc [kA/m] | | Squareness ratio [%] | |
|---|---|---|---|---|---|---|---|
| Example 10 | 58 | 78 | 41 | 1670 | ○ | 91.9 | ○ |
| Example 11 | 60 | 80 | 48 | 1720 | ○ | 92.5 | ○ |
| Example 12 | 53 | 75 | 40 | 1730 | ○ | 92.2 | ○ |
| Comparative Example 1 | 38 | 69 | 21 | 1120 | × | 84.2 | × |
| Comparative Example 2 | 32 | 64 | 24 | 980 | × | 89.4 | × |
| Comparative Example 3 | 41 | 68 | 32 | 1620 | ○ | 89.4 | × |
| Comparative Example 4 | 53 | 72 | 25 | 1840 | ○ | 89.2 | × |
| Comparative Example 5 | 48 | 65 | 38 | 1820 | ○ | 86.8 | × |

As is clear from Table 3, it is possible to set the ratio of crystal grains having a crystal grain diameter of 50 μm or more to 75% or more in a polycrystal structure of the sintered compact (sintered magnet) by performing the step of removing the moisture contained in the compression molded body under a predetermined condition, before the sintering step of the compression molded body. It has been also confirmed that the sintered magnet having such a polycrystal structure is excellent both in the coercive force and the squareness ratio. In contrast to this, it has been confirmed that each of Comparative Examples 1,2 in which the composition range of the sintered magnet is out of the predetermined range and Comparative Examples 3 to 5 in which the moisture removing step is insufficient have a ratio of crystal grains having a crystal grain diameter of 50 μm or more is less than 75%, and is inferior in at least one of the coercive force and the squareness ratio.

While some arrangements of the present invention have been described, these arrangements have been presented by way of example only, and are not intended to limit the scope of the invention. The novel arrangements may be embodied in a variety of other forms, and various omissions, substitutions and changes may be made without departing from the spirit of the invention. The arrangements and their modifications are included in the scope and sprit of the invention and included in the invention described in claims and their equivalents.

(Numbered Clauses relating to the arrangements)

1. A permanent magnet comprising a sintered compact, the sintered compact having a composition expressed by a composition formula:

$$R_pFe_qM_rCu_sCo_{100-p-q-r-s},$$

where R represents at least one element selected from rare earth elements,
M represents at least one element selected from the group consisting of Zr, Ti, and Hf,
p represents a number satisfying $10.5 \leq p \leq 12.5$ atomic%,
q represents a number satisfying $24 \leq q \leq 40$ atomic%,
r represents a number satisfying $0.88 \leq r \leq 4.5$ atomic%, and
s represents a number satisfying $3.5 \leq s \leq 10.7$ atomic%,
wherein the sintered compact comprises a structure having crystal grains each composed of a main phase including a $Th_2Zn_{17}$ crystal phase, and a crystal grain boundary of the crystal grains, and
wherein an average crystal grain diameter of the crystal grains is 50 μm or more and 100 μm or less, and a ratio of the crystal grains having a crystal grain diameter of 50 μm or more in the structure of the sintered compact is 75% or more.

2. The permanent magnet according to clause 1,
wherein a ratio of crystal grains having crystal grain diameters falling within a range of $\pm 10$ $\mu$m with respect to the average grain diameter of the crystal grains in the structure of the sintered compact is 30% or more.
3. The permanent magnet according to clause 1 or clause 2,
wherein the crystal grain comprises a cell phase having the $Th_2Zn_{17}$ crystal phase, and a cell wall phase surrounding the cell phase.
4. The permanent magnet according to any one of clause 1 to clause 3, wherein a coercive force of the permanent magnet is 1500 kA/m or more, and a squareness ratio of the permanent magnet is 90% or more.
5. The permanent magnet according to any one of clause 1 to clause 4, wherein 50 atomic% or more of the element R is Sm, and 50 atomic% or more of the element M is Zr.
6. The permanent magnet according to any one of clause 1 to clause 5, wherein 20 atomic% or less of the Co is replaced with at least one element A selected from the group consisting of Ni, V, Cr, Mn, Al, Ga, Nb, Ta, and W.
7. A rotary electrical machine comprising the permanent magnet according to any one of clause 1 to clause 6.
8. The rotary electrical machine according to clause 7 being a motor or a generator.
9. The rotary electrical machine according to clause 7 or clause 8 comprising a stator, and a rotor arranged in the stator, wherein the stator or the rotor comprises the permanent magnet.
10. A vehicle comprising the rotary electrical machine according to any one of clause 7 to clause 9.
11. The vehicle according to clause 10,

wherein the rotary electrical machine is a generator, and a rotation is transmitted to a shaft provided at an end of the generator.

**Claims**

1. A permanent magnet comprising a sintered compact, the sintered compact having a composition expressed by a composition formula:

$$R_pFe_qM_rCu_sCo_{100-p-q-r-s},$$

where R represents at least one element selected from rare earth elements,
M represents at least one element selected from the group consisting of Zr, Ti, and Hf,
p represents a number satisfying $10.5 \le p \le 12.5$ atomic%,
q represents a number satisfying $24 \le q \le 40$ atomic%,
r represents a number satisfying $0.88 \le r \le 4.5$ atomic%, and
s represents a number satisfying $3.5 \le s \le 10.7$ atomic%,
wherein the sintered compact comprises a structure having crystal grains each composed of a main phase including a $Th_2Zn_{17}$ crystal phase, and a crystal grain boundary of the crystal grains, and
wherein an average crystal grain diameter of the crystal grains is 50 $\mu$m or more and 100 $\mu$m or less, and a ratio of the crystal grains having a crystal grain diameter of 50 $\mu$m or more in the structure of the sintered compact is 75% or more.

2. The permanent magnet according to claim 1,
wherein a ratio of crystal grains having crystal grain diameters falling within a range of $\pm 10$ $\mu$m with respect to the average grain diameter of the crystal grains in the structure of the sintered compact is 30% or more.

3. The permanent magnet according to claim 1 or claim 2,
wherein the crystal grain comprises a cell phase having the $Th_2Zn_{17}$ crystal phase, and a cell wall phase surrounding the cell phase.

4. The permanent magnet according to any one of claim 1 to claim 3,
wherein a coercive force of the permanent magnet is 1500 kA/m or more, and a squareness ratio of the permanent magnet is 90% or more.

5. The permanent magnet according to any one of claim 1 to claim 4,
wherein 50 atomic% or more of the element R is Sm, and 50 atomic% or more of the element M is Zr.

**6.** The permanent magnet according to any one of claim 1 to claim 5,
wherein 20 atomic% or less of the Co is replaced with at least one element A selected from the group consisting of Ni, V, Cr, Mn, Al, Ga, Nb, Ta, and W.

**7.** A rotary electrical machine comprising the permanent magnet according to any one of claim 1 to claim 6.

**8.** The rotary electrical machine according to claim 7 being a motor or a generator.

**9.** The rotary electrical machine according to claim 7 or claim 8 comprising a stator, and a rotor arranged in the stator, wherein the stator or the rotor comprises the permanent magnet.

**10.** A vehicle comprising the rotary electrical machine according to any one of claim 7 to claim 9.

**11.** The vehicle according to claim 10,
wherein the rotary electrical machine is a generator, and a rotation is transmitted to a shaft provided at an end of the generator.

# FIG. 1

# FIG. 2

# FIG. 3

# FIG. 4

# FIG. 5

# FIG. 6

200

201

# FIG. 7

300

301

Europäisches
Patentamt

European
Patent Office

Office européen
des brevets

# EUROPEAN SEARCH REPORT

Application Number

EP 17 15 7587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 733 710 A1 (TOSHIBA KK [JP]) 21 May 2014 (2014-05-21) * claims 1,2,3,9,10 * ----- | 1-11 | INV. H01F1/055 |
| A | R Gopalan ET AL: "Studies on structural transformation and magnetic properties in Sm 2 Co 17 type alloys", Journal of Materials Science, 1 September 2001 (2001-09-01), pages 4117-4123, XP055109597, Retrieved from the Internet: URL:http://rd.springer.com/content/pdf/10. 1023/A:1017992132473.pdf [retrieved on 2014-03-24] * figure 3; table 1 * ----- | 1-11 | |
| A | C. MAURY ET AL: "Genesis of the cell microstructure in the Sm(Co, Fe, Cu, Zr) permanent magnets with 2:17 type", PHYSICA STATUS SOLIDI (A), vol. 140, no. 1, 16 November 1993 (1993-11-16), pages 57-72, XP055108686, ISSN: 0031-8965, DOI: 10.1002/pssa.2211400104 * abstract; figure 3 * ----- | 1-11 | |

TECHNICAL FIELDS
SEARCHED      (IPC)

H01F

The present search report has been drawn up for all claims

| Place of search | Date of completion of the search | Examiner |
|---|---|---|
| Munich | 21 July 2017 | Primus, Jean-Louis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 15 7587

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2017

| Patent document cited in search report | Publication date | Patent family member(s) | Publication date |
|---|---|---|---|
| EP 2733710 A1 | 21-05-2014 | CN 103839652 A | 04-06-2014 |
| | | EP 2733710 A1 | 21-05-2014 |
| | | EP 2942790 A1 | 11-11-2015 |
| | | JP 2014103239 A | 05-06-2014 |
| | | US 2014139305 A1 | 22-05-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014101547 A
- JP 2014192193 A
- JP 2008029148 A
- JP 2008043172 A